# EUROPEAN PATENT APPLICATION

(11) **EP 4 782 998 A1**
(43) Date of publication of application: **29.07.2026**
(21) Application number: 25382050.0
(22) Date of filing: 28.01.2025
(51) Int. Cl.: G06F 9/455, H04L 101/622

(54) **USING MAC ADDRESSES TO IDENTIFY INDIVIDUAL VIRTUAL MACHINES**

(71) Applicant: Siemens Rail Automation S.A.U., 28760 Tres Cantos (Madrid) (ES)
(72) Inventor: Ramirez Moya, Santos, 28830 San Fernado de Henares (Madrid) (ES); Ramirez Garcia, Jorge, 28806 Madrid (ES); Sanz Fernandez, Javier, 28025 Madrid (ES)
(74) Representative: Siemens Patent Attorneys

(57) **Abstract**

There is described a method of managing a virtual machine, VM, system (100), the method comprising:
i) creating a plurality of VMs (110, 120, 130) and creating at least one media access control, MAC, address for each VM of the plurality of VMs (110, 120, 130);
ii) linking each MAC address with a VM-identifier that identifies a specific VM (110) of the plurality of VMs (110, 120, 130), and storing the MAC addresses and linked VM-identifiers;
iii) providing at least one MAC address associated with an individual VM (110) of the plurality of VMs (110, 120, 130), and requesting the corresponding stored VM-identifier; and
iv) providing the stored VM-identifier linked to the at least one provided MAC address, thereby identifying the individual VM (110) of the plurality of VMs (110, 120, 130).

## Description

### Field of the Invention

The present invention falls within the technical field of virtual machines, notably the creation and organization of virtual machines.

### Technical Background

A virtual machine (VM) is a software-based emulation of a physical computer that runs an operating system and applications. VMs allow multiple operating systems to run on a single physical machine, each operating in an isolated environment. VMs are generally created using a software called a hypervisor that allocates the host system's resources (such as CPU, memory, and storage) to the virtual machines. Even though different VMs are independent and separated of each other, they can be coupled to a common network, in particular a virtual local area network (VLAN).

When hundreds or thousands of virtual machines are created to perform a particular work, it is necessary that any single virtual machine, on start-up, knows exactly what machine it is. Further, each virtual machine should know which workload to execute (query for specific workload).

However, in conventional cases of cloud/on-premises virtualization (or in any generical use), where no specific software has been pre-installed in virtual machines inside the operating system, there is no process to know (when VM is starting), which VM it is (virtual machine running identification), let alone which workload to execute by said VM. In general, if N virtual machines are started (from 1 to N) any single virtual machine starting-up does not know what machine it is, so it is not possible to execute a different workload in a different machine.

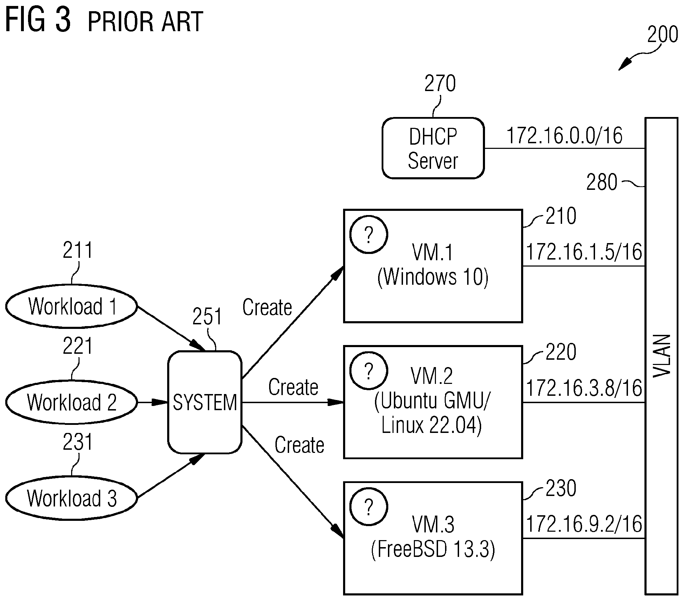

A conventional example is illustrated in **Figure 3****:** a hypervisor 251 creates a plurality of virtual machines 210, 220, 230. Said VMs are coupled to a common network 280 together with a common DHCP server 270. Using the DHCP server 270, IP addresses can be assigned to the individual VMs 210, 220, 230, so that they can communicate via the common IP network 280. There is a plurality of workloads 211, 221, 231 that should be distributed specifically to the individual VMs 210, 220, 230, in particular the first VM 210 should process the first workload 211, the second VM 220 should process the second workload 221, and the third VM 230 should process the third workload 231.

However, as analyzed above, the individual VMs 210, 220, 230 do not know which machine they are (illustrated by question marks), so that it is not possible (at the start of the VMs) to assign specific workload to the individual VMs.

In other words, the system that creates and runs virtual machines does not know the association between the workload and VMs. It is not possible to assign a different workload to a different VM because the VM does not know the individual identification, when starting-up. Furthermore, diagnostics from virtual machines is not possible because the VM does not know the individual identification when starting-up.

Even though the system that creates and starts the virtual machine can receive IP communication (from one or several virtual machine network interfaces; see the common IP network) from all virtual machines, but the system cannot identify every single VM in the executed group of VMs (1...N).

As a user can create a project based on products and this project can automatically be converted in e.g. 1 or 1000 virtual machines (depending on type and workload type, and this can be changed from one launch to other), there is no possibility to identify what specific workload needs to be sent to an individual virtual machine using e.g. IP address. The IP addresses are dynamic and assigned by the DHCP server. If the process stops and is launched later, different IP addresses will be assigned to the network interfaces in one and the same virtual machine.

### Summary of the invention

An objective of the present invention is to provide an efficient virtual machine system, in particular with respect to identification and workload deployment.

This objective is achieved by the measures taken in accordance with the independent claims. Further advantageous embodiments are proposed by the dependent claims. In particular, a method, a system, and a use are described in the following.

According to a first aspect of the invention, there is described a method of managing a virtual machine (VM) system (e.g. comprising a VM system entity and a data storage entity), the method comprising:
i) creating/generating a plurality of VMs (e.g. two or more, in particular one hundred or more) and creating/generating (thereby, at the same time) at least one media access control (MAC) address for each VM of the plurality of VMs (in particular create a MAC address for each network interface of each VM);
ii) linking each MAC address with a VM-identifier (e.g. a unique identifier of a specific VM, e.g. a number) that identifies a specific/individual VM of the plurality of VMs (e.g. one VM-identifier is linked to exclusively one VM), and in particular storing the MAC addresses and linked VM-identifiers (e.g. in a data storage entity such as a data server);
iii) providing at least one MAC address associated with an individual/specific VM of the plurality of VMs (e.g. by said individual VM), and requesting (e.g. by said individual VM from the data storage entity) the (to said provided MAC address) corresponding (stored) VM-identifier; and
iv) providing (e.g. by the data storage entity) the (stored) VM-identifier linked to the at least one provided MAC address, thereby identifying the individual VM of the plurality of VMs (so that said individual VM can be identified, and in particular receive specific workload).

According to a second aspect of the invention, there is described a virtual machine (VM) system, comprising:
i) a VM system entity and ii) a data storage entity, (communicatively) coupled to the VM system entity.
   a) the VM system configured to:
      create a plurality of VMs, and (thereby) creating at least one media access control (MAC) address for each VM, and
      link each MAC address with a VM-identifier that identifies a specific VM.
   b) the data storage entity configured to store said (linked) MAC addresses and VM-identifiers.
   c) the VM system entity further configured to:
      provide at least one MAC address associated with an individual VM of the plurality of VMs to
      the data storage entity and request the corresponding stored VM-identifier (from the data storage entity), and
      identify the individual VM of the plurality of VMs based on the VM-identifier and/or deploy VM-specific workload to the individual VM.

According to a third aspect of the invention, there is described a use (method of using) at least one MAC address of at least one virtual machine of a plurality of VMs, to identify said at least one VM and/or distribute/deploy VM-specific workload to said at least one VM (in particular based on the VM identification).

In the context of the present document, the term "VM system" may in particular refer to a hardware/software configured to manage a plurality of VMs. For example, a VM system may comprise a physical machine (e.g. with at least one processor) to run a software configured to create/run a plurality of VMs. A VM system may be implemented for example as a cloud environment (in particular a hybrid cloud environment) or an on-premises environment. The VM system may be organized in one location or may be distributed over a plurality of locations. In an embodiment, a VM system comprises a VM system entity and/or a data storage entity. In an embodiment, VMs, created by the VM system entity, are also part of the VM system entity.

In the context of the present document, the term "VM system entity" may in particular refer to a hardware/software configured to create/run/manage a plurality of VMs. For example, a VM system entity can comprise a software-based environment that emulates the hardware and functionality of a physical computer, allowing multiple operating systems or applications to run independently on the (single) physical machine. The isolated VMs may be used for testing, developing, resource optimization, processing files/scripts/programs, etc. (all of these tasks to be done may be considered as "workload"). Examples of VM system entities may include for example VMware, vSphere, Proxmox, Virtual Box, etc. In a preferred example, the VM system entity is configured to generate one or more MAC addresses per VM, in particular when creating the respective VM. Further, the VM system entity may be configured to generate a specific VM-identifier for each generated VM (e.g. VM-1, VM-2, etc.). In a further embodiment, the VM system entity may be configured to link the one or more MAC addresses per VM to the specific VM-identifiers, respectively. Accordingly, using one or more MAC addresses associated with a specific VM, said VM may be clearly identified using the VM-identifier linked to said one or more MAC addresses.

In the context of the present document, the term "data storage entity" may in particular refer to a hardware/software configured to store data, in particular the MAC addresses linked to specific VM-identifiers (e.g. a MAC register). The data storage entity may be further configured to store VM-specific workload and/or results (output) of the VMs (after processing the workload). The data storage entity may be configured as any kind of storage medium, e.g. a data server, a data container, a data base, etc. In a preferred embodiment, the VM system entity is communicatively coupled to the data storage entity, so that data can be transferred between said entities. For example, the VM system entity may transfer the above described linked MAC address-VM-identifier pairs (register) and/or VM-specific workload (e.g. data files) to the data storage entity for storing. In an embodiment, the data storage entity may be communicatively coupled to the created VMs, e.g. via a common network, in particular an IP-based network. In this manner, the individual VMs may directly request identification information and/or workload from the data storage entity. Further, the VMs may also provide finished output (after processing the workload) to the data storage entity.

In the context of the present document, the term "MAC address" may in particular refer to a unique identifier assigned to a network interface, in particular a network interface card (NIC), of a device for communication on a (local) network. Even though the VMs do not have a physical hardware, the MAC address is emulated by software in the virtual environment. A MAC address may for example comprise 48 bits (especially in case of ethernet), usually represented as six pairs of hexadecimal numbers (e.g., 00:1A:2B:3C:4D:5E). Thereby, it may be ensured that data is delivered to the correct device/VM within a network. In an embodiment, a MAC address may be created for each network interface of a VM. In contrast to an IP address, such a MAC address may not be dynamic (does not change). In an example, a MAC address assigned to a (network interface of a) VM is constant (does not change like an IP address).

In the context of the present document, the term "VM-identifier" may in particular refer to any kind of identifier suitable for identifying a specific/individual VM in a plurality of VMs. In a basic example, each VM will be provided (upon creation) with a unique number, e.g. 1, 2, 3, etc. In a more sophisticated example, specific and more complex IDs may be generated for each VM. Using such a VM-identifier, a specific VM may be unambiguously identified. Such a VM-identifier may be linked to one or more MAC addresses of the specific/individual VM. In this manner, using the one or more MAC addresses associated with a specific VM, said VM may be clearly identified. Hereby, it may be considered that a VM "knows" its MAC address(es), but does not "know" its VM-identifier.

According to an exemplary embodiment, the invention may be based on the idea that an efficient virtual machine system, in particular with respect to identification and/or workload distribution, may be provided, when MAC addresses, created for the individual VMs of the plurality of VMs, are used to identify the associated individual VM (register VMs on creation using MAC addresses).

Conventionally (see discussion above and Figure 3), the individual VMs do not know their VM running identification and, accordingly, no specific workload can be assigned. In other words, if N virtual machines are started (from 1 to N), any single VM that is starting up does not know what virtual machine it is, so it is not possible to execute a different workload in a different VM.

It has now been found that a simple, but highly efficient, manner to identify the individual VMs of a plurality of VMs and assign VM-specific workload accordingly. While the individual VMs do not know their VM-identifier, they know the associated MAC addresses (provided upon creation). In comparison to other potential identifiers such as an IP address, the MAC address is unique, constant, and robust, since it does not change during the lifetime of the individual VM. The VM management system (VM system entity) links the created MAC addresses to the corresponding VM-identifiers (and VM-specific workload). Said data can then be stored in a data storage entity. Using a common network, such as a VLAN, each VM may request its associated VM-identifier (and VM-specific workload) from the data storage entity, simply by providing its associated one or more MAC addresses.

This approach may be highly efficient and robust and may be used in a large variety of systems, for example each system with an IP-network context may be applied.

### Exemplary Embodiments

In an embodiment, the method further comprises: requesting (e.g. by the at least one (individual) VM of the plurality of VMs) (at the data storage entity), a VM-specific workload (in other words: the VM-specific workload for said individual VM). In an embodiment, the method further comprises: providing (by the data storage entity) the VM-specific workload to the at least one VM (corresponding to said VM-specific workload). This may provide the advantage that workload can be distributed in a specific and efficient manner. Based on the at least one MAC address of a VM, a workload (e.g. data files to be processed) can be assigned to said specific VM. Thereby, automation can be increased and efforts for additional management software can be saved.

In an embodiment, the VM-specific workload is associated with at least one specific MAC address and/or VM-identifier. This may provide the advantage that the VM-specific workloads (i.e. a workload to be processed by a specific VM of a plurality of VMs) can be linked and distributed in an easy but reliable manner. For example, the VM-specific workload (or identifiers of the VM-specific workload) can be linked to one or more VM-identifiers and/or MAC addresses. In an embodiment, the VM-specific workload (or identifiers of the VM-specific workload) can be stored in the data storage entity and linked to the stored MAC addresses/VM-identifiers, e.g. in the MAC register of the data storage entity.

In an embodiment, the VM system comprises a VM system entity and a (communicatively) coupled data storage entity. In an embodiment, the MAC addresses and the linked VM-identifiers (and in particular the VM-specific workloads), are stored in the data storage entity (e.g. in a MAC register). For example, a table/register may be stored in the data storage entity, in which the VM-identifiers are linked to corresponding MAC addresses, respectively. Further, the VM-identifier/MAC addresses may be linked to VM-specific workload. In this manner, the identification information and/or workload (data files) may be stored in an efficient, reliable, and easy-to-access manner.

In an embodiment, the method further comprises providing (by the VM system entity), the VM-specific workloads to the data storage entity. In an embodiment, the method further comprises providing (by the VM system entity) the MAC addresses and/or the (linked) VM-identifiers to the data storage entity. Thereby, the data created by the VM system entity may be stored in an area that is easily and reliable accessible by the VMs (in particular via a common network).

In an embodiment, the at least one VM of the plurality of VMs comprises at least one network interface, in particular each VM of the plurality of VMs comprises at least one network interface. In an embodiment, the network interface is an interface to a common or a private network. In an embodiment, the network interface is an ethernet interface/adapter. In an embodiment, the at least one network interface is associated with a (unique) MAC address. In particular, the VM system entity may create a MAC address for each network interface of a VM (specifically for each network interface of each VM). Such a MAC address may be a unique and permanent identifier for the associated VM. In an embodiment, a VM comprises a first network interface for a common network and/or a second network interface for a private network.

In an embodiment, the plurality of VMs are coupled (in particular via the individual network interfaces) to a common network, in particular a common VLAN, and/or to a private network, in particular a private VLAN. In an embodiment, at least two VMs of the plurality of VMs are further coupled, in particular via further individual network interfaces, to a private network. The common network may enable communication of (each of) the VM with the data storage entity (and a configuration entity). The private network in turn may enable exclusive communication between specific VMs; e.g. a private network may be formed for a common project.

In an embodiment, a configuration entity, in particular a DHCP server, is coupled to the common network. In an embodiment, the method comprises: configuring the IP-addresses of the network interfaces, in particular by the configuration entity. This may provide the advantage that the VM (network interfaces) can be configured in an efficient and established manner. By configuring, in particular assigning IP-addresses, and efficient communication in the network may be enabled. An IP address may also be provided to the data storage entity, so that the VMs can communicate via IP addresses with the data storage entity.

In an embodiment, the method further comprises: clustering a first plurality of VMs (of the plurality of VMs) to process a first plurality of VM-specific workloads (project deploy), and/or clustering a second plurality of VMs to process a second plurality of VM-specific workloads. In an embodiment, the first plurality of VMs are coupled to a first common network. In an embodiment, the second plurality of VMs are coupled to a second common network. In an embodiment, the first common network is different/separated/independent from the second common network. In an embodiment, a common data storage entity and/or a common configuration entity is coupled to the first common network. In an embodiment, a further common data storage entity and/or a further common configuration entity is coupled to the second common network. This may provide the advantage of resource-efficient operation. By clustering the VMs to separate networks, tasks/deploys may be well organized and resources may be used more efficiently. Also different projects can be separated form each other in this manner.

In an embodiment, the method further comprises storing result data that are output by the plurality of VMs, when/after processing the VM-specific workloads, in particular in the data storage entity. Besides the workloads, the results of the processed workloads may be saved in the data storage entity. In an embodiment, the method comprises: deleting/destroying at least one VM of the plurality of VMs after the VM-specific workload has been processed. When a specific project has been terminated, it may make sense to delete the associated VM, in particular when said VM is not needed anymore. Thereby, computer power may be saved and organization may be facilitated.

In an embodiment, the VM system comprises at least one of: a cloud environment, an on-premises environment, a hybrid cloud environment (e.g. a mixture of a common and a private cloud/network). This may provide the advantage that the described VM system may be implemented in a flexible manner in a variety of important applications.

In an embodiment, the MAC addresses and the VM-identifiers are linked before starting/running the VMs (in particular before processing (of workload) by the VMs is done. Thereby, identification and workload-distribution may be done before start, thereby saving time and effort.

In an embodiment, the data storage entity is configured as at least one of a data server, a cloud, an external storage device, an internal storage device, a data container. In an embodiment, the common network is an IP network. In an embodiment, the at least one VM and the data storage entity communicate via IP addresses. In an embodiment, the VM-identifier comprises a number. By such approaches, established and efficient technologies may be directly applied.

In an embodiment, the VM system entity comprises at least one hypervisor, in particular to create the two or more clusters. In an embodiment, the data storage entity comprises a MAC register, in particular a table in that the MAC addresses and the linked VM-identifiers, and in particular the VM-specific workload, are listed. These features may enable efficient organization.

In an embodiment, the VM system entity is configured for at least one of: create the plurality of VMs, create the MAC addresses, create the network interfaces, link the MAC addresses to the individual VMs using the VM-identifiers. Thus, the VM system entity may be used as an efficient VM management system.

In an embodiment, the at least one VM comprises an internal agent (e.g. a software) to request the corresponding VM-identifier/workload (from the data storage entity). In an embodiment, at least two VMs of the plurality of VMs emulate different operation systems (e.g. Windows and Linux). Thereby, flexibility may be increased.

In an embodiment, a DNS server is coupled to the common network. In an embodiment, the data storage entity comprises an IP address pre-configured or configured by the DNS server (or the configuration server). This option may be favorable in some applications.

In an embodiment, the data storage entity is further configured to store VM-specific workloads. In an embodiment, the VM system entity is further configured to: request, by the at least one VM of the plurality of VMs, the specific VM-workload from the data storage entity. Thereby, an efficient distribution of workload may be realized.

In an exemplary embodiment, as a user can create a project based on products and this project can automatically be converted in e.g. 1 or 1000 virtual machines (depending on type and workload type, and this can be changed from one launch to other), there is no possibility to identify what specific work needs to be sent to an individual machine, e.g. using IP address (this is a dynamic IP address assigned by DHCP Server, if stop and launch next time (e.g. month), other/different IP address shall be assigned by any ethernet adapter in same virtual machine). Therefore, it is proposed to use the described MAC registration mechanism, when the system creates VMs, to know how to split workload into specific VMs.

It should be noted that embodiments of the invention have been described with reference to various subject-matters. In particular, some embodiments have been described with reference to method claims, while other embodiments have been described with reference to apparatus claims. However, a skilled person will infer from the foregoing and the following description that, unless otherwise indicated, in addition to any combination of features belonging to one type of subject-matter, any combination of features relating to different subject-matter is also considered to be disclosed by this document. This is particularly the case between features of the method claims and features of the apparatus claims.

The aspects defined above and further aspects of the present invention result from the examples of embodiments to be described below and are explained by reference to the examples of embodiments. The invention is described in more detail below with reference to embodiments to which the invention is not limited.

### Brief Description of the Drawings

Figure 1 shows a virtual machine system, according to an exemplary embodiment of the invention.
Figure 2 shows a basic principle of the virtual machine system, according to an exemplary embodiment of the invention.
Figure 3 shows conventional virtual machines.
Figure 4 shows a VM system with two clusters, according to an exemplary embodiment of the invention.
Figure 5 shows a detail of Figure 4, according to an exemplary embodiment of the invention.

### Detailed Description of the Drawings

The representations in the drawings are schematic. It should be noted that in different illustrations, similar or identical elements or features are provided with the same reference signs or with reference signs that differ from the corresponding reference signs only within the first digit. In order to avoid unnecessary repetition, elements or features that have already been explained in relation to a previously described embodiment are not explained again at a later point in the description.

In addition, spatially relative terms such as "front" and "back", "up" and "down", "left" and "right", etc. are used to describe the relationship of one element to another element, as shown in the figures. For example, the spatially relative terms can apply to orientations used that deviate from the orientation shown in the figures. Obviously, these spatially relative terms refer only to a simplification of the description and the orientation shown in the figures and are not necessarily limiting, since an apparatus according to an embodiment of the invention may assume orientations other than those shown in the figures, in particular when it is used.

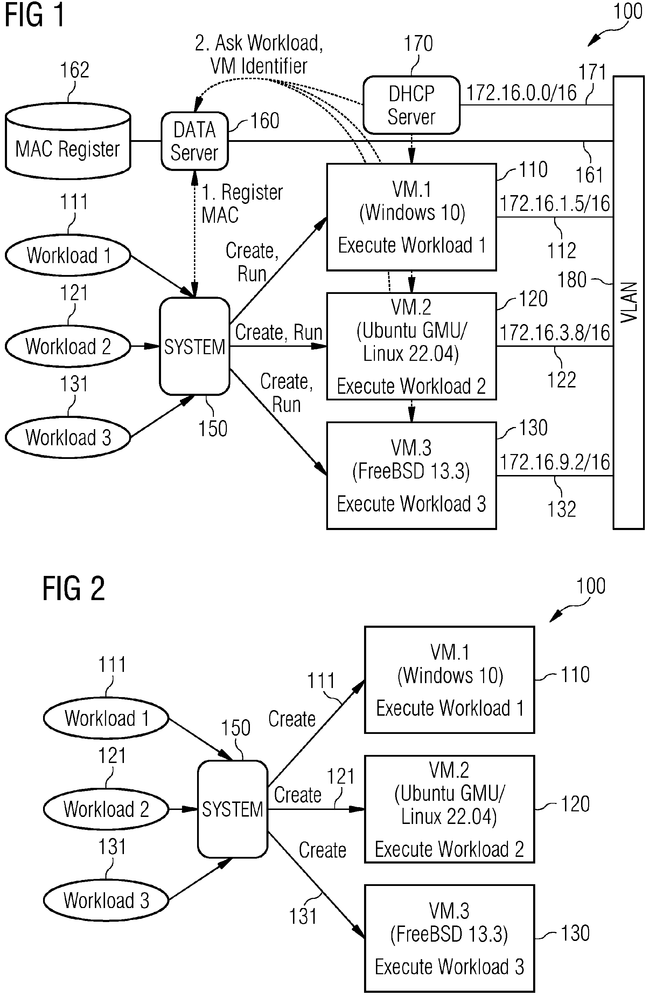

Figure 1 shows a virtual machine system 100, according to an exemplary embodiment of the invention. The VM system 100 comprises a VM system entity 150 (e.g. an automatic deployment system) and a data storage entity 160 (here a data server). The VM system entity 150 functions as a VM manager that is configured to create and run a plurality of VMs 110, 120, 130. In this example, it is schematically shown that each VM emulates another operation system. The VM system entity 150 receives a plurality of workloads 111, 121, 131 to be processed by said VMs 110, 120, 130. It is schematically shown that each VM is actually suitable to execute/process a VM-specific workload (see workload 1, workload 2, workload 3). However, as discussed with respect to Figure 3 above, the individual VMs 110, 120, 130 do not know at start their VM-identification and VM-specific workload.

Each VM 110, 120, 130 comprises at least one respective network interface 112, 122, 132 to a common network 180, here a VLAN. A configuration entity 170, here a DHCP server, is also coupled through a configuration interface 171 to said common network 180. In this manner, the VMs 110, 120, 130 can be configured and individual IP addresses can be provided to enable efficient and reliable communication in the common network 180.

The VM system 100 further comprises the data storage entity 160 that is also coupled, via a data interface 161, to the common network 180. The VM system entity 150 is now configured to create (upon creation of a VM) for each VM of the plurality of VMs 110, 120, 130 at least one MAC address. The MAC addresses are hereby associated with the respective network interfaces 112, 122, 132. The VM system entity 150 further links each MAC address with an VM-identifier (here VM.1, VM.2, VM.3) that identifies a specific VM 110 of the plurality of VMs 110, 120, 130. These data are then stored in the data storage entity 160 (see MAC register 162).

Through the common network 180, the individual VMs 110, 12, 130 can communicate with the data storage entity 160, thereby requesting the stored VM-identifiers and/or VM-specific workload. For this purpose, the individual VM 110 provides the respective at least one MAC address associated with said individual VM 110. The data storage entity 160 then provides the stored VM-identifier and/or VM-specific workload linked to the at least one provided MAC address in the MAC register 162.

In an exemplary embodiment, the MAC registration mechanism can be performed as follows:
1. System 150 uses a data server (data container) 160 and a DHCP Server 170 connected to the same ethernet segment 180 called (e.g. VLAN Common A, B, etc.) for an IP network, for example 172.16.0.0/16. Optionally, a DNS server can be used.
2. The data server 160 IP address can be pre-configured or configured in said optional DNS server (for example 172.16.0.10).
3. The data server 160 can include a daemon (software running in the background) running in a pre-configured port (for example 65000).
4. The system 150 copies needed workload 111, 121, 131 to the data server 160, including any files needed.
5. When the system 150 creates a virtual machine X (X:1..N) 110, 120, 130, the system 150 stores all MAC addresses created by this virtual machine X. MAC addresses are stored and linked with an VM-identifier (X) (e.g. VM 1 (A8BED8214D00,
   820E34AE13F8, ...), VM 2 (4BD5BC1CDE1F, 0D2E9E3F5DD1, ...), etc.
6. The system 150 starts all virtual machines 110, 120, 130.
7. When a single VM 110 starts, an internal agent (software of said VM) connects to the data server 160, requesting user data (request own workload 111). In request message, the internal agent includes all MAC addresses for the internal virtual machine network interfaces 112.
8. When the data server 150 receives the message, the VM 110 is totally identified because a single MAC address is linked to a single VM-identifier.
9. The data server 150 answers to the VM 110 with the VM-identifier and with specific workload 111 to execute.
10. The VM 110 can download and execute the specific workload 111 and send specific diagnostic about atomic commands executed.

The data server 160 can be used as a data container, where workload (input files to be used in virtual machines) and results (virtual machine processing results "output files") are stored.

**Figure 2** shows a basic principle of the virtual machine system 100, according to an exemplary embodiment of the invention. Figure 2 is a simplification of Figure 1 and demonstrates that, using the method according to the invention, the VM-specific workloads 111, 121, 131 can be directly and efficiently distributed to the respective VMs 110, 120, 130 by the VM system manager 150.

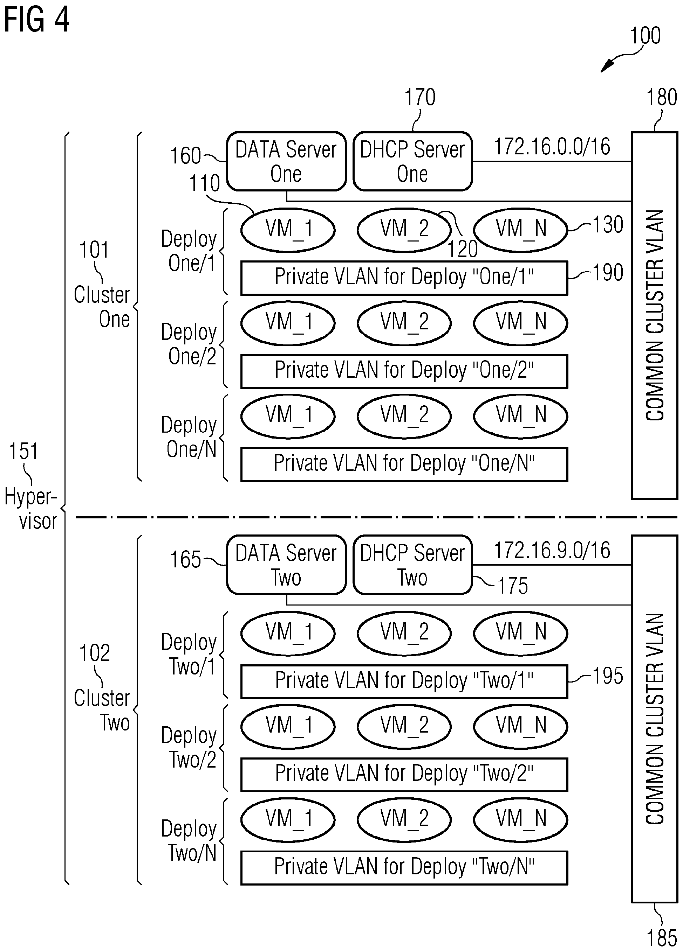

**Figure 4** shows a VM system 100 with two clusters 101, 102, according to an exemplary embodiment of the invention. The principle of this embodiment is comparable to the embodiment of Figure 1, yet the organization is more complex. A hypervisor 151 (as part of VM system entity 150) creates two or more clusters 101, 102 of VMs, coupled to separated networks 180, 185 (here common cluster VLANs). The first cluster 101 comprises a plurality of VMs 110, 120, 130 coupled to a first common network 180. A first data storage entity 160 and a first configuration entity 170 are also coupled to the first common network 180. The second cluster 102 comprises a further plurality of VMs, coupled to a second common network 185. A second data storage entity 165 and a second configuration entity 175 are also coupled to the second common network 185.

Additionally, the VMs of each cluster 101, 102 are grouped into (project) deploys (here three deploys per cluster). In each of said deploys of the first cluster 101, the respective VMs are further coupled to a respective first private network 190 (private VLAN). ). In each of said deploys of the second cluster 102, the respective further VMs are further coupled to a respective second private network 195 (private VLAN). The term "deploy" refers here to a group of VMs executed for a project. Different projects can be launched in a cluster (depending on available resources). Each cluster has its own hardware and VLAN resources. A user can be informed on launching that a cluster has not enough resources to launch project in another cluster.

In an exemplary embodiment, the method of MAC registration, together with cluster organization, can be performed as follows:
1. Suppose that user "Peter" needs to launch a system test composed by 1000 Python scripts that can be executed in a Linux simulator. This simulator is labelled as "SIM_LINUX" as a virtual machine template.
2. User Peter creates a project for "SIM_LINUX" and supplies Python scripts folder for system test to be performed containing 1000 Python scripts (workload).
3. The system 150 asks to Peter: how many virtual machines he wants to create. Peter answers 100 virtual machines.
4. The system 150 configures a deploy file with 100 virtual machine sections. In each virtual machine section, 10 Python scripts are configured. This is the individual (VM-specific) workload to be executed in a single virtual machine. The system 150 distributes the workload 111, 121, 131 for virtual machines 110, 120, 130 to be created.
5. Peter selects hypervisor/cluster "VM Center 03/Cluster Simulator 05".
6. Peter presses LAUNCH button in system 150 to execute needed system tests.
7. The system 150 copies the deploy information and Python scripts to "VM Center 03/Cluster Simulator 05/data server".
8. The system 150 creates 100 virtual machines with names (names are unique) (VM-identifiers):
   · Peter/VM Center 03/Cluster Simulator 05/SIM_LINUX/VM0001
   • ...
   • Peter/VM Center 03/Cluster Simulator 05/SIM_LINUX/VM0100
9. The system 150 creates by any virtual machine as many ethernet adapters 112, 122, 132 as configured in deploy type (+ first common adapter), in this example, two:
   - Peter/VM Center 03/Cluster Simulator 05/SIM_LINUX/VM0001/ETH0 > Common Cluster VLAN
   - Peter/VM Center 03/Cluster Simulator 05/SIM_LINUX/VM0001/ETH1 > Private Deploy VLAN
   - Peter/VM Center 03/Cluster Simulator 05/SIM_LINUX/VM0001/ETH2 > Private Deploy VLAN

Ethernet adapter ETHO is used to communicate all VMs in cluster 101 with VLAN 180 and all VMs in cluster 102 with VLAN 185. Cluster 101 is isolated from Cluster 102 and VLAN 180 is isolated from VLAN 185. This common VLAN 180 is used to communicate all virtual machines in the same cluster 101 with data server 160 for that cluster. Any configured cluster has its own data server 160 and DHCP server 170 for the virtual machines. Different projects running in the same cluster can have identical private IP addresses because different private VLAN are used to isolate each project deploy.

The rest of the ethernet adapters are connected to a unique private VLAN 190 created for each project deploy (Project).
10. The system 150 stores MAC addresses for all ETH 112, 122, 132 created and assigns to "virtual full machine name" (any MAC address is unique in cluster, unique in any data server 160):
   - 0501cc97da7d -> Peter/VM Center 03/Cluster Simulator 05/SIM_LINUX/VM0001
   - 0501f388cbba -> Peter/VM Center 03/Cluster Simulator 05/SIM_LINUX/VM0001
   - 05016fca3d72 -> Peter/VM Center 03/Cluster Simulator 05/SIM_LINUX/VM0001
11. The system 150 starts all virtual machines 110, 120, 130.
12. Virtual machines 110, 120, 130 start and internal virtual machine agent EXE is executed.
13. The EXE agent of any single virtual machine sends a message to data server 160 using common IP address 172.16.0.10 (excluded from DHCP server range)
   and supplying a list of own virtual machine MAC addresses, for example: "Command: UserData, Mac:0501 cc97da7d,0501 f388cbba,05016fca3d72"

The data server 160 identifies MAC address supplied for virtual machine name "VM001" in this example thanks to creation MAC address registration in that data server 160. In an example, the maximum number of virtual machines in a single cluster is 2¹⁶ (by a single data server and DHCP server) (maximum theorical is 2e16 (65536) as DHCP server 172.16.0.0/16 uses 16 bits for IP network, so rest of 16 bits are used to assign IP addresses (65536). As first IP address cannot be used (network address) and last IP address cannot be used (broadcast address) and first 10 addresses are reserved for future use, data server, etc, one needs to rest 12 to 65536, so that, in this example, 65524 is the maximum number of virtual machines by each cluster or DHCP server segment).
14. The data server 160 answers with specific workload 111 and virtual machine name section inside deploy file (in this example VM0001):
   "Indication:UserData,Deploy:Peter/VM Center 03/Cluster Simulator 05/SIM_LINUX,Section:VM0001"
15. Virtual machine VM0001 downloads deploy file from data server 160 and
   scripts configured in section VM0001 of deploy file. These scripts shall be executed, and results shall be written back to data server 160 in folder:
   "Peter/VM Center 03/Cluster Simulator 05/SIM_LINUX/VM0001"
16. The user has the possibility to see reports for tests completed and terminate project to destroy all virtual machines 110, 120, 130 created.

Depending on project type configuration, VMs that have terminated workload shall be automatically stopped and/or terminated. When a project is terminated, any private VLAN used for deploy are removed. The user creates projects (a project is a group of products) adding products (different types of machine templates with wildcard configuration that can be asked to user). A project can be launched to any supported and configured hypervisors and/or clusters.

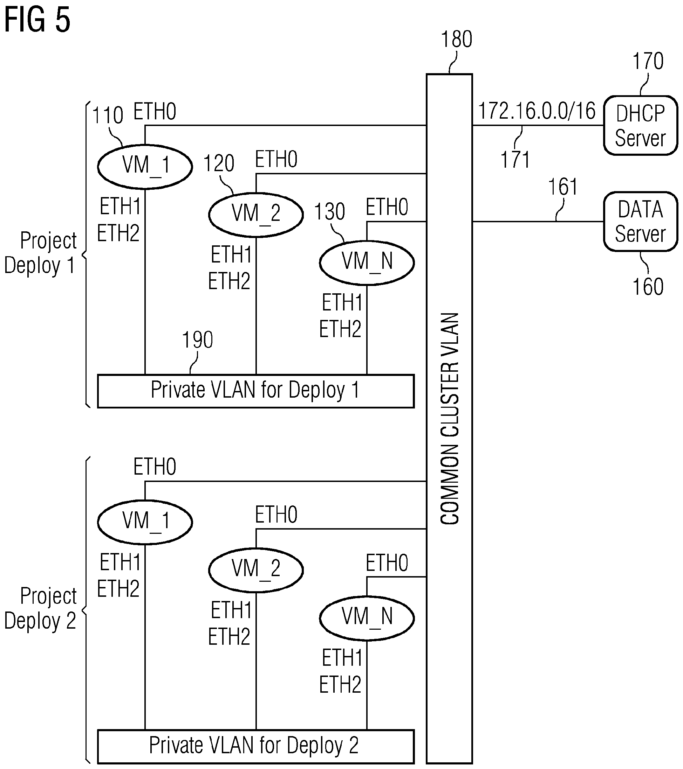

**Figure 5** shows a detail of Figure 4, according to an exemplary embodiment of the invention, i.e. the deploys 1 and 2 of the first cluster 101 (different deploy running in the same cluster). It can be seen that each VM 110, 120, 130 comprises three network interfaces (ethernet adapters): ETH0, ETH1, and ETH2. While ETHO is used as a network interface to the common (cluster) network 180, ETH1 and ETH2 are used as network interfaces to the private network 190 of this specific project deploy.

In an exemplary embodiment, a common VLAN is unique for all virtual machines running inside a cluster. This VLAN is used to communicate first ethernet adapter ETHO for all virtual machines. These machines shall assign to ETHO the IP address supplied by DHCP server in the range 172.16.0.0/16. The main target is communicating all virtual machines inside cluster with data server in cluster. The data server contains workloads for all virtual machines.

When a single virtual machine is starting up, a request is sent to the data server for getting workload and/or user data to be executed. Any information in deploy file shall be downloaded by virtual machines from the data server. Any result to report generated by virtual machines shall be copy back to data server. For example, IP address 172.16.0.10 is used by data server inside any cluster.

In an exemplary embodiment, a private VLAN is unique for a project deploy to set-up in configured ethernet (ETH1, ETH2, etc.) adapters the IP addresses required by the project. This VLAN is used to communicate virtual machines inside project deploy using required IP addresses in the project for any VM (the system shall configure specific required IP addressing for each VM as project type, configuration file and user file request). This IP addresses are the real IP address needed by this project deploy that need to be tested without modification (same IP addresses as in real world).

Different projects running in the same cluster can have identical IP addresses. Non-collision is guaranteed because different private VLANs are used by different project deploys. Project needs can configure more than one private VLAN. Project type configure the connectivity between ethernet adapters and private VLANs.

This deployment environment can be a dynamic virtual machine execution. A user configures projects, these projects can be launched, and virtual machines shall be started. It is possible to access from the system individual VMs running using e.g. RDP, SSH or VNC and to query tests results for any machine and/or workload performed.

When the project has terminated or is not needed, the project is terminated, and all virtual machines are destroyed. Only results and deploy configuration for project are stored in the data server 160. In an example, when the project is terminated, results and project files are not deleted. The project can be launched on user request, creating and running virtual machines again. When the project is terminated, virtual machines and resources such as VLAN are destroyed/deleted. Only when the project is removed by the user, all information about the project and results are deleted from the data server.

In future/further operations, if the user needs to perform the same process, the project can be started again with identical or different source information. Source files can be changed by the user. The main objective can be to keep virtual machines running only the minimum time as needed to save hardware resources.

It should be noted that the term "comprising" does not exclude other elements or steps, and the use of the article "a" does not preclude a multitude. Elements that are described in connection with different embodiments can also be combined. It should also be noted that reference signs in the claims should not be interpreted as limiting the scope of the claims.

To summarize, the present invention proposes a method of managing a VM system, the method comprising: creating a plurality of VMs and creating at least one media access control (MAC) address for each VM of the plurality of VMs; linking each MAC address with a VM-identifier that identifies a specific VM of the plurality of VMs; providing at least one MAC address associated with an individual VM of the plurality of VMs; requesting the corresponding VM-identifier, and providing the VM-identifier linked to the at least one provided MAC address, thereby identifying the individual VM of the plurality of VMs. The invention further relates to a virtual machine system with a VM system entity and a data storage entity, and to a use of MAC addresses to identify individual VMs of a plurality of VMs.

Regardless of the grammatical gender of a particular term, it includes people with male, female or other gender identities.

### Reference signs

- 100: Virtual machine (VM) system
- 101: First cluster
- 102: Second cluster
- 110: First VM
- 111: First VM-specific workload
- 112: First network interface
- 120: Second VM
- 121: Second VM-specific workload
- 122: Second network interface
- 130: Third VM
- 131: Third VM-specific workload
- 132: Third network interface
- 150: VM system entity, VM manager
- 151: Hypervisor
- 160: Data storage entity, data server
- 161: Data interface
- 165: Further data storage entity
- 162: MAC register
- 170: Configuration entity, DHCP server
- 171: Configuration interface
- 175: Further configuration entity
- 180: Common network, common VLAN
- 185: Further common network
- 190: Private network, private VLAN
- 195: Further private network

## Claims

1. A method of managing a virtual machine, VM, system (100), the method comprising:
creating a plurality of VMs (110, 120, 130) and creating at least one media access control, MAC, address for each VM of the plurality of VMs (110, 120, 130);
linking each MAC address with a VM-identifier that identifies a specific VM (110) of the plurality of VMs (110, 120, 130), and storing the MAC addresses and linked VM-identifiers;
providing at least one MAC address associated with an individual VM (110) of the plurality of VMs (110, 120, 130), and requesting the corresponding stored VM-identifier; and
providing the stored VM-identifier linked to the at least one provided MAC address, thereby identifying the individual VM (110) of the plurality of VMs (110, 120, 130).

2. The method according to claim 1, further comprising:
requesting, by the at least one VM (110) of the plurality of VMs (110, 120, 130), a VM-specific workload (111); and
providing the VM-specific workload (111) to the at least one VM (110).

3. The method according to claim 2,
wherein the VM-specific workload (111) is associated with at least one specific MAC address and/or VM-identifier.

4. The method according to one of the preceding claims,
wherein the VM system (100) comprises a VM system entity (150) and a coupled data storage entity (160), and
wherein the MAC addresses and the linked VM-identifiers, and in particular the VM-specific workloads (111, 121, 131), are stored in the data storage entity (160).

5. The method according to claim 4, wherein the method further comprises:
providing, by the VM system entity (150), the VM-specific workloads (111, 121, 131) to the data storage entity (160); and/or
providing, by the VM system entity (150), the MAC addresses and the linked VM-identifiers to the data storage entity (160).

6. The method according to one of the preceding claims,
wherein the at least one VM (110) of the plurality of VMs (110, 120, 130) comprises at least one network interface (112), in particular an ethernet adapter, and
wherein the at least one network interface (112) is associated with a unique MAC address.

7. The method according to one of the preceding claims,
wherein the plurality of VMs (110, 120, 130) are coupled, in particular via the individual network interfaces (112, 122, 132), to a common network (180), in particular a VLAN,
in particular wherein at least two VMs (110, 120) of the plurality of VMs (110, 120, 130) are further coupled, in particular via further individual network interfaces, to a private network (190).

8. The method according to one of the preceding claims
wherein a configuration entity (170), in particular a DHCP server, is coupled to the common network (180),
in particular wherein the method comprises: configuring the IP-addresses of the network interfaces (112, 122, 132) by the configuration entity (170).

9. The method according to one of the preceding claims, further comprising:
clustering a first plurality (101) of VMs (110, 120, 130) to process a first plurality of VM-specific workloads (111, 121, 131), and
clustering a second plurality (102) of VMs to process a second plurality of VM-specific workloads,
in particular wherein the first plurality (101) of VMs are coupled to a first common network (180) and/or wherein the second plurality (102) of VMs are coupled to a second common network (185),
more in particular wherein a common data storage entity (160) and/or a common configuration entity (170) is coupled to the first common network (180) and/or wherein a further common data storage entity (165) and/or a further common configuration entity (175) is coupled to the second common network (185).

10. The method according to one of the preceding claims, further comprising:
storing result data that are output by the plurality of VMs (110, 120, 130), when/after processing the VM-specific workloads (111, 121, 131), in particular in the data storage entity (160); and/or
deleting at least one VM (110) of the plurality of VMs (110, 120, 130) after the VM-specific workload (111) has been processed.

11. The method according to one of the preceding claims,
wherein the VM system (100) comprises at least one of: a cloud environment, an on-premises environment, a hybrid cloud environment.

12. The method according to one of the preceding claims, comprising at least one of the following features:
wherein the MAC addresses and the VM-identifiers are linked before starting the VMs (110, 120, 130), in particular before processing workload by the VMs;
wherein the data storage entity (160) is configured as at least one of a data server, a cloud, an external storage device, an internal storage device, a data container;
wherein the common network (180) is an IP network;
wherein the at least one VM (110) and the data storage entity (160) communicate via IP addresses;
wherein the VM-identifier comprises an identification number;
wherein the VM system entity (150) comprises at least one hypervisor (151), in particular to create the two or more clusters (101, 102);
wherein the data storage entity (160) comprises a MAC register (162), in particular a table in that the MAC addresses and the linked VM-identifiers, and in particular the VM-specific workload, are listed;
wherein the VM system entity (150) is configured for at least one of: create the plurality of VMs (110, 120, 130), create the MAC addresses, create the network interfaces (112, 122, 132), link the MAC addresses to the individual VMs (110, 120, 130) using the VM-identifiers;
wherein the at least one VM (110) comprises an internal agent to request the corresponding VM-identifier;
wherein at least two VMs (110, 120) of the plurality of VMs (110, 120, 130) emulate different operation systems;
wherein a DNS server is coupled to the common network (180);
wherein the data storage entity (160) comprises an IP address pre-configured or configured by the DNS server.

13. A virtual machine, VM, system (100), comprising:
a VM system entity (150), configured to:
create a plurality of VMs (110, 120, 130),
create at least one media access control, MAC, address (111, 121, 131) for each VM (110, 120, 130), and
link each MAC address (111, 121, 131) with a VM identifier (112, 122, 132) that identifies a specific VM (110) of the plurality of VMs (110, 120, 130);
a data storage entity (160), coupled to the VM system entity (150), and configured to: store the MAC addresses and linked VM-identifiers;
wherein the VM system entity (150) is further configured to:
provide at least one MAC address associated with an individual VM (110) of the plurality of VMs (110, 120, 130) to the data storage entity (160) and request the corresponding stored VM-identifier, and
identify the individual VM (110) of the plurality of VMs (110, 120, 130) based on the VM-identifier.

14. The VM system (100) according to claim 13,
wherein the data storage entity (160) is further configured to:
store VM-specific workloads (111, 121, 131); and
wherein the VM system entity (150) is further configured to:
request, by the at least one VM (110) of the plurality of VMs (110, 120, 130), the specific VM-workload from the data storage entity (160).

15. Using at least one MAC address of at least one virtual machine, VM, (110) of a plurality of VMs (110, 120, 130), to identify said at least one VM (110) to distribute VM-specific workload (111, 121, 131) to said at least one VM (110) based on the identification.
